(19)

Europäisches
Patentamt
European
Patent Office
Office européen
des brevets

(11) **EP 1 854 999 A1**

(12) **EUROPEAN PATENT APPLICATION**

(43) Date of publication:
**14.11.2007 Bulletin 2007/46**

(51) Int Cl.:
*F03D 1/04* (2006.01)     *F03D 1/02* (2006.01)

(21) Application number: **06113881.4**

(22) Date of filing: **12.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Mass Metropolitan International AG 6760 Grevenmacher (LU)**

(72) Inventors:
• **BRUK, Alexander RU 119607 Moskow (RU)**

• **REGER, Vladislav D-54290 Trier (DE)**
• **SMIDT, Franc L-2560 Luxembourg (LU)**

(74) Representative: **Beissel, Jean et al Office Ernest T. Freylinger S.A., 234, route d'Arlon, B.P. 48 8001 Strassen (LU)**

(54) **Wind turbine and wind power installation**

(57) A wind turbine comprises a rotor with a certain number of blades, a stator supporting the rotor in such a way that the rotor may rotate on the turbine axis for generating electric energy and a shroud extending circumferentially around the stator and the rotor and supporting the stator so as to define an air channel of a certain air channel diameter at an inlet portion of the shroud. The shroud has a maximum outer diameter such that the air channel diameter is comprised in the range from 0.82 to 0.9 times the maximum outer diameter. Furthermore, the shroud has a length in direction of the turbine axis that is comprised in the range from 0.1 to 0.25 times the outer diameter.

Fig. 1

EP 1 854 999 A1

## Description

## Technical field

The present invention generally relates to wind turbines and wind power installations, in particular to wind power installations of modular construction.

## Background Art

Different types of modular wind power installations are known. CH 668 623 A5 describes a wind power device with a plurality of stages carrying wind turbines, and wherein each stage can be oriented into the wind independently from the other stages. SU 1645603 A1 relates to a wind power installation wherein an arrangement of wind turbines is hanged from masts. US 5,328,334 discloses a wind power installation, wherein propellers are mounted in series on a wind line that extends between posts. JP 04-350369 relates to an airship moored to ground that carries a plurality of wind turbines. US 4,140,433 discloses wind-driven turbines and arrangements thereof. DE 39 05 337 A1 discloses a method for concentrating the wind stream at a wind turbine with a horizontal axis.

Wind power installations comprising a plurality of wind turbines currently suffer from different drawbacks. First of all, the efficiency of the installation may be low because of an adverse interference of neighbouring wind turbines due to eddies caused by the blades of the wind turbines. Second, the complexity of the installations makes it difficult to orient the wind turbines into the wind for optimising the efficiency of the installation. Third, the efficiency of the installations may be suboptimal because of to high a starting wind speed, i.e. the minimum wind speed for the wind turbines to operate. In addition, wind turbines constitute a serious danger for birds.

## Technical problem

It is an object of the present invention to provide an improved wind turbine suitable for use in a wind power installation of modular construction. This object is achieved by a wind turbine as claimed in claim 1.

## General Description of the Invention

The invention concerns a wind turbine comprising a rotor with a certain number of blades, a stator supporting the rotor in such a way that the rotor may rotate on the turbine axis for generating electric energy and a shroud extending circumferentially around the stator and the rotor and supporting the stator so as to define an air channel that has a certain air channel diameter at an inlet portion of the shroud. According to an important aspect of the invention, the shroud has a maximum outer diameter such that the air channel diameter at the inlet portion of the shroud is comprised in the range from 0.82 to 0.9 times the maximum outer diameter of the shroud. This choice of dimensions provides for minimal aerodynamic losses when the air enters the air channel during operation of the wind turbine. Naturally, this increases the efficiency of the wind turbine. Furthermore, the shroud has a length in direction of the turbine axis that is comprised in the range from 0.1 to 0.25 times the outer diameter. It is worthwhile noting that in longitudinal direction, i.e. in direction of the turbine axis, the shroud not necessarily extends along the entire length of the stator.

Preferably, the pitch of the blades is dynamically adjustable to wind speed.

According to a preferred embodiment of the wind turbine, the stator includes a central nose portion arranged on the turbine axis upwind of the rotor. The central nose portion is rotationally symmetrical with respect to the turbine axis and has the shape of a hemiellipsoid that is rotationally symmetrical about the turbine axis. The diameter of the central nose portion in direction perpendicular to the turbine axis is advantageously comprised in the range from 0.4 to 0.6 times the maximum outer diameter of the shroud, i.e. the air channel diameter, and the length of the central nose portion in direction of the turbine axis is advantageously comprised in the range from 0.4 to 0.5 times its diameter in perpendicular direction.

Advantageously, the stator comprises a central tail portion arranged on the turbine axis downwind of the rotor that includes a substantially rotationally symmetrical tail fairing. At the rotor, the tail fairing has a diameter substantially equal to the diameter of the nose portion. In downwind direction, the tail fairing tapers to the turbine axis so that, in a longitudinal cross section along the turbine axis, the contour of the tail fairing follows a parabolic course.

Most preferably, the wind turbine comprises a protective grid for protection against birds mounted upwind of the rotor.

In a further aspect, the invention concerns wind power installations with a plurality of wind turbines as discussed above. According to a first embodiment, such a wind power installation comprises a substantially streamlined support body, which is rotatably mounted with respect to a vertical axis and supports a plurality of the above wind turbines. The support body has a substantially drop-shaped horizontal cross section and is substantially rotationally symmetrical with respect to a longitudinal support body axis. The plurality of wind turbines are arranged circumferentially around the support body in a plane perpendicular to the support body axis. In addition, the support body comprises a nose body located upwind of the plane in which the wind turbines are arranged, and a tail body located downwind of this plane. The nose body has the shape of a hemiellipsoid rotationally symmetrical about the support body axis. At the plane of the wind turbines, the tail body is arranged substantially flush with the nose body, and it tapers in downwind direction to the support body axis so that, in a longitudinal cross section along the support body axis, a contour of the tail body follows a parabolic course.

It is also proposed a first module for a wind power installation. The first module has a substantially drop-shaped horizontal cross section and substantially vertical outer walls. The first wind power installation module is substantially symmetrical with respect to a longitudinal vertical plane and comprises a nose body of substantially hemielliptical horizontal cross section and a tail body located downwind of the nose body. The tail body is arranged substantially flush with the nose body and tapers in downwind direction to the longitudinal vertical plane. Wind turbines are arranged on the first wind power installation module on both sides thereof with respect to the vertical plane of symmetry. Such modules can be assembled to a wind power installation with a substantially streamlined support body, wherein the support body extends substantially along a vertical axis and comprises a plurality of first wind power installation modules arranged one on top of the other. In order to achieve good efficiency, the wind power installation modules are rotatably mounted about the vertical axis.

Another, second, wind power installation module has a substantially drop-shaped horizontal cross section, a substantially semicircular transversal cross section and is substantially symmetrical with respect to a vertical, longitudinal plane. It comprises, furthermore, a rounded nose body and a tail body located downwind of the nose body. The tail body is arranged substantially flush with the nose body and tapers in downwind direction. Wind turbines are arranged in a substantially semicircular configuration on the second wind power installation module. Preferably, the turbines of the second module are rotatable about a common vertical axis. It should be noted that the second wind power installation module may be arranged on top of a series of first wind power installation modules as a terminal module or as a standalone module.

**Brief Description of the Drawings**

Preferred embodiments of the invention will now be described, by way of example, with reference to the accompanying drawings in which:

Fig. 1          is a longitudinal cross sectional view of a wind turbine;

Fig. 2          is a transversal cross sectional view of the wind turbine of Fig.1;

Fig. 3          is a horizontal cross sectional view of a first embodiment of a wind power installation;

Fig. 4          is a transversal cross sectional view of the wind power installation of Fig. 3;

Fig. 5          is a horizontal cross sectional view of a second embodiment of a wind power installation;

Fig. 6          is a transversal cross sectional view of the wind power installation of Fig. 5;

Figs. 7a, 7b     are side views of a wind power installation similar to that of Fig. 5
                 Fig. 8 is a longitudinal cross sectional view of a third embodiment of a wind power installation;
                 Fig.9 is a transversal cross sectional view of the wind power installation of Fig. 8;
                 Figs. 10a, 10b are side views of a variant of the wind power installation of Fig. 8.

**Description of Preferred Embodiments**

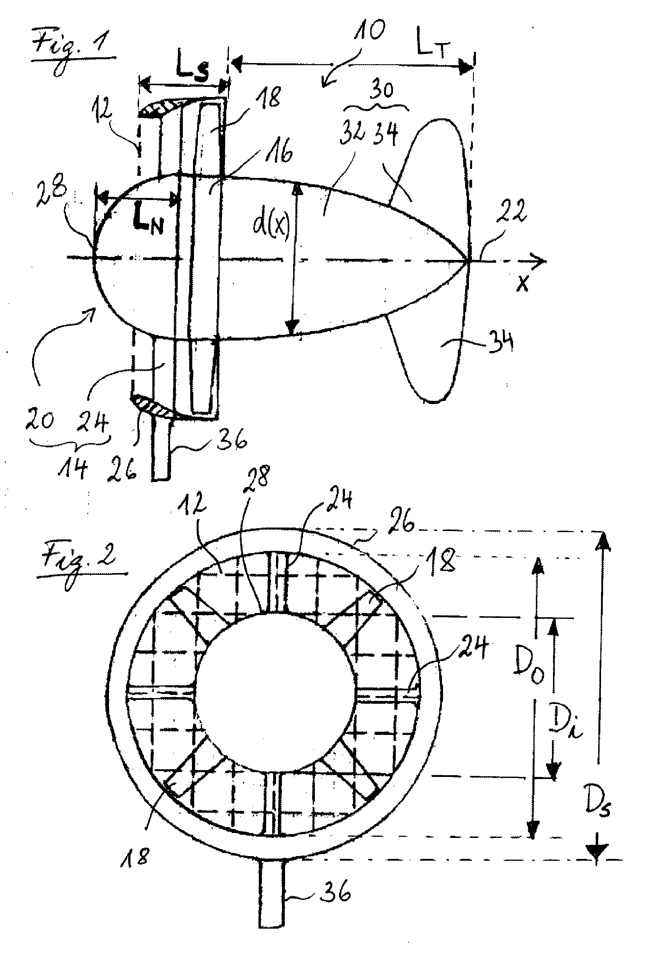

Figs. 1 and 2 show preferred embodiments of a wind turbine 10. The wind turbine 10 comprises a stator 14 bearing a rotor 16. The rotor 16 comprises a certain number of blades 18, whose pitch is dynamically adjustable to wind speed. The stator 14 comprises a central portion 20 extending along the turbine axis 22 and stator blades 24, which extend radially outwardly from the central portion 20 and which are fixed to a shroud 26. The shroud 26 extends circumferentially around the rotor 16 and the stator 14. The stator 14 and the shroud 26 define an annular wind channel.

The central portion 20 of the stator 14 includes a nose portion 28 arranged upwind of the rotor 16 and a tail portion 30 located downwind of the rotor 16. The nose portion 28 is rotationally symmetrical with respect to the turbine axis 22 and has the shape of a hemiellipsoid of rotation about the turbine axis 22. The tail portion 30 comprises a tail fairing 30 that is rotationally symmetrical with respect to the turbine axis 22 and control surfaces 34.

A protective grid 12 is arranged upwind of the rotor 16, at the inlet of the annular wind channel to avoid that birds are dragged into the turbine by the air stream. The turbine 12 can be rotatably arranged on a mast 36. The protective grid 12 can, for instance, be made of caproic fibres (i.e. coal-plastic fibres). The mesh size of the grid and the material are chosen so that the aerodynamic losses are minimised while offering acceptable protection for birds. Preferably the clear area of the grid amounts to 96-98 % of the cross sectional area of the air channel, so that the averaged hydraulic losses due to the grid are comprised in the range from 2-4 %.

During operation of the wind turbine 10, the wind enters the turbine 10 from the side of the nose portion 28. The streamlined nose portion 28 directs the incoming wind away from the turbine axis 22, through the protective grid 12, into the annular air channel between the central portion 30 and the shroud 26. The reduction of the cross section available for the wind causes an increase of the wind speed in the annular air channel. In case the streamlined stator blades 24 are located upwind of the rotor blades 18, a preliminary spin is created in the front of the rotor 16. It should be noted, however, that the streamlined stator blades may also be arranged downwind of the rotor 16. The rotor 16 which then transforms the kinetic energy of the wind into mechanical energy of rotation. The rotor 16 drives a shaft that is coupled with an electric generator. Having passed the stator blades 24 and the rotor blades 18, the air leaves the air channel and streams alongside the tail fairing 30 and the control surfaces 34, which turns the turbine 10 upwind.

The power P of wind having the density p, streaming at wind speed V through a cross section A is given by:

$$P = \frac{1}{2} \rho A V^3 \ .$$

The power $P_1$ of an incident airflow streaming through an area of the diameter $D_1$ is

$$P_1 = \frac{1}{2} \rho \pi \left( \frac{D_o}{2} \right)^2 V_1^3 \ ,$$

where $V_1$ is the speed and $\rho$ the density of the incoming airflow. The power $P_2$ of the airflow streaming through the air channel is

$$P_2 = \frac{1}{2} \rho \pi \left[ \left( \frac{D_o}{2} \right)^2 - \left( \frac{D_i}{2} \right)^2 \right] \cdot V_2^3 \ ,$$

where $V_2$ is the air speed in the air channel, Do is the outer diameter of the air channel (i.e. the inner diameter of the shroud 26), $D_i$ is the inner diameter of the air channel (i.e. the diameter of the nose portion 28). The ratio $P_2/P_1$ depends on the $D_o$, $D_i$, $V_1$ and $V_2$. It should be noted that $V_2$ depends on the speed of the incoming airflow $V_1$. It has been found that the ratio $P_2/P_1$ is maximum if the ratio $D_i/D_o$ lies in the range of 0.4 to 0.6 and if the ratio $L_N/D_i$ of the length $L_N$ of the nose portion 28 to the diameter $D_i$ of the nose portion lies between 0.4 and 0.5. Choosing the dimensions $D_i/D_o$ and $L_N/D_i$ in the indicated ranges reduces by a factor 2 the starting wind speed, compared to a conventional wind turbine without a shroud, from approximately $V_1$ = 4 m/s down to approximately 2 m/s.

In a longitudinal cross section of the turbine 10, as shown in Fig. 1, the contour of the tail fairing 2 is described by a parabola

$$\frac{d(x)}{D_i} = 1 - \frac{x^2}{L_T^2} \ ,$$

where x is the distance from the rotor on the turbine axis, d(x) the diameter of the tail fairing at the distance x from the rotor, $D_i$ the diameter of the tail fairing at the rotor and $L_T$ the length of the tail fairing. In practice, the length $L_T$ may be approximately equal to $D_i$ or comprised in the range from 1 to 2 times $D_i$.

The length $L_S$ of the shroud 26 in the direction of the turbine axis corresponds to at least to the sum of the lengths of the stator blades 24 and the rotor blades 18 in the direction of the turbine axis. Experimental results indicate that an optimum value of the length $L_S$ is preferably comprised in the range from 0.1 to 0.25 times the outer diameter $D_S$ of the shroud 26. Furthermore, the outer diameter $D_S$ is chosen such that the outer air channel diameter Do (i.e. the inner diameter of the shroud 26) is comprised in the range from 0.82 to 0.9 times the outer diameter of the shroud 26.

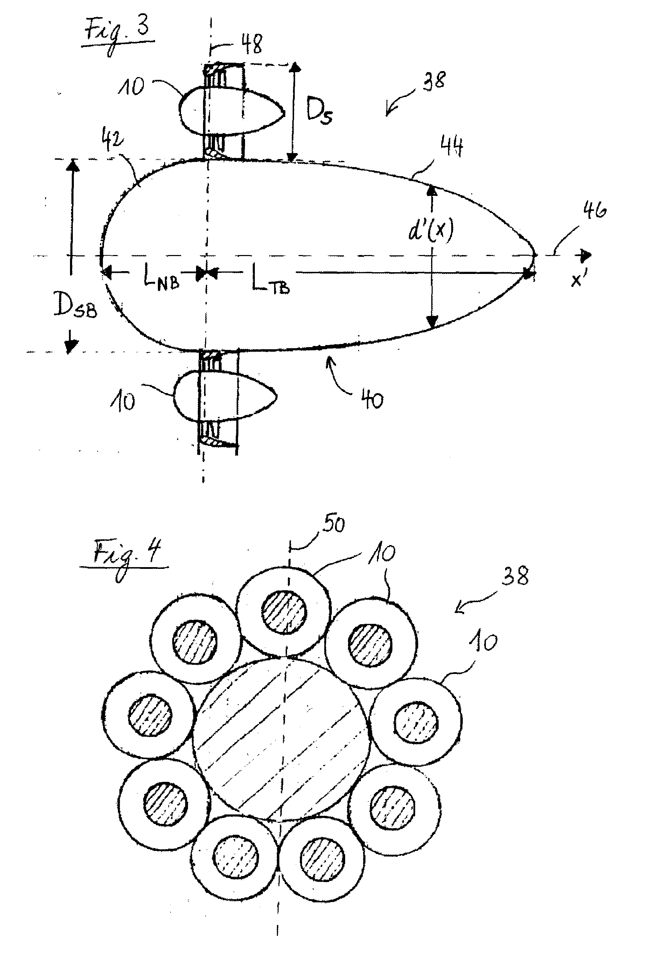

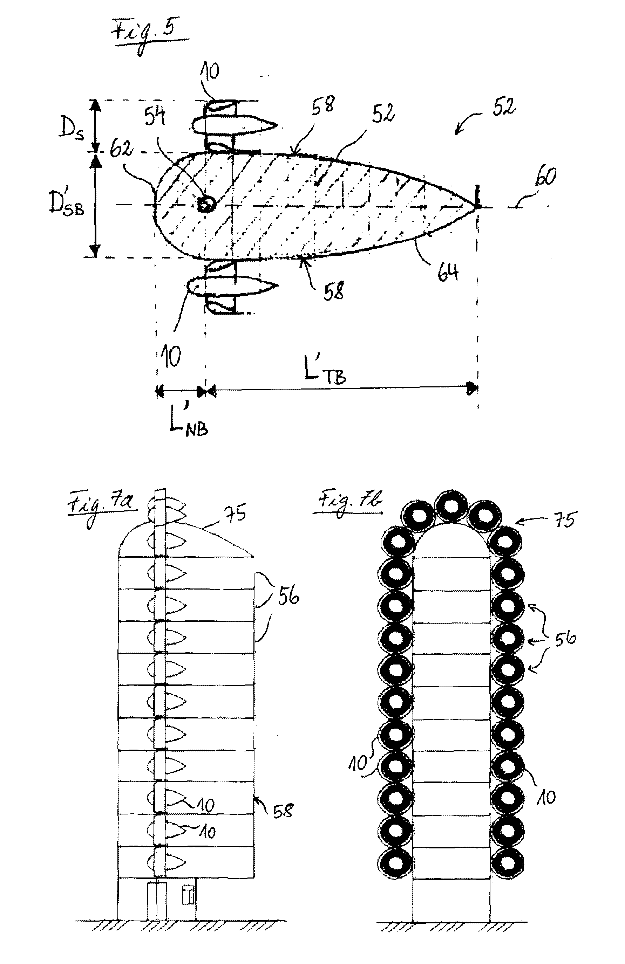

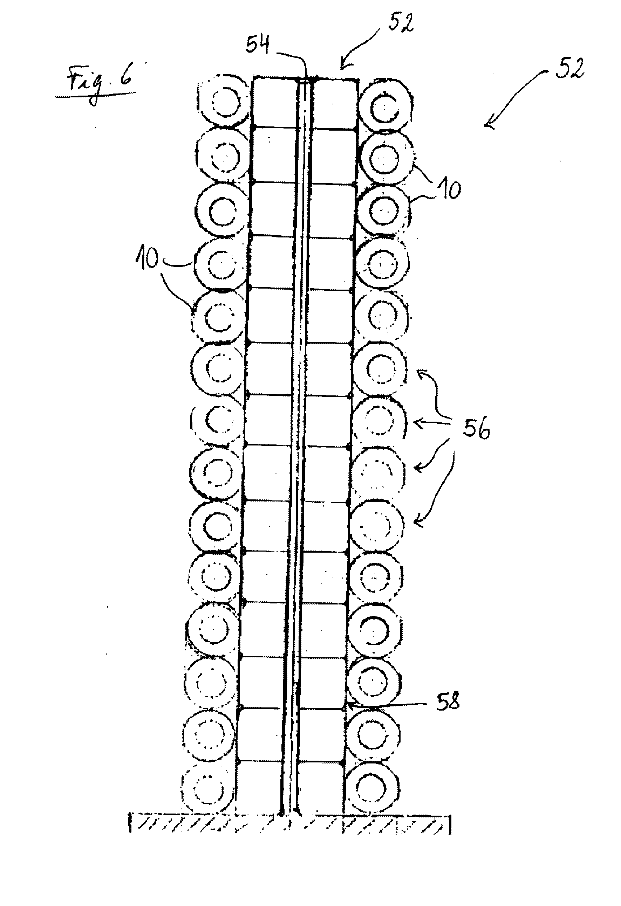

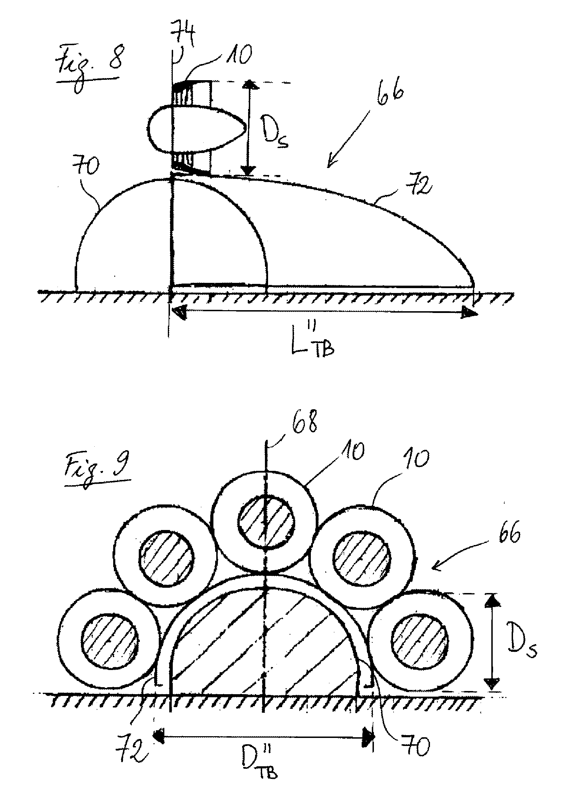

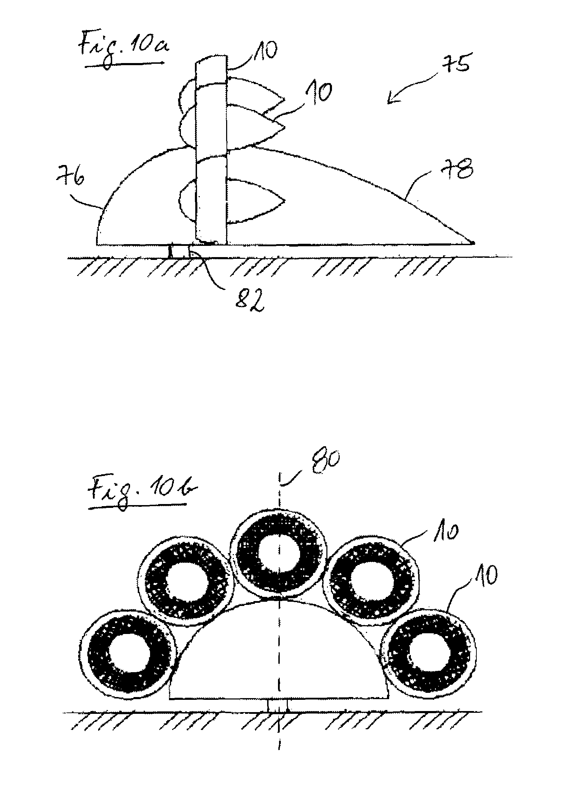

Figs. 3 and 4 show a wind power installation 38 comprising a streamlined support body 40 that supports a plurality of wind turbines 10. As can be seen in Fig. 3, the longitudinal cross section of the support body 40 is substantially drop-shaped. The support body 40 comprises a rounded nose body 42 normally facing into the direction of the wind during operation of the wind power installation 38 and a tail body 44 normally facing away from the direction of the wind during operation of the wind power installation 38. The support body 40 is rotationally symmetrical about a longitudinal axis 46, herein referred to as the support body axis.

The nose body 42 has substantially has the shape of a hemiellipsoid, such as e.g. a hemisphere, rotationally symmetrical about the support body axis 46. The plurality of wind turbines 10 are arranged circumferentially around the support body 40 in a plane 48 of greatest diameter of the support body 40, this plane 48 being perpendicular to the support body axis 46. The turbines are arranged so that their axes are substantially parallel with the support body axis 46.

The tail body 44 connects substantially flush to the nose body 42 at the plane 48. In downwind direction, the tail body 44 tapers to the support body axis in such a way that in the longitudinal cross section the contour of the tail body follows the course of a parabola given by:

$$\frac{d'(x)}{D_{SB}} = 1 - \frac{x'^2}{L_{TB}^2} \ ,$$

where $D_{SB}$ is the diameter of the support body 40 at the plane 48, $L_{TB}$ the length of the tail body 44, x' the coordinate on the support body axis 46 and d'(x) the diameter of the tail body 44 for the coordinate x'.

The length $L_{NB}$ of the nose body 42 in the direction of the support body axis 46 lies in the range from 0.4 to 0.6 times the diameter $D_{SB}$, i.e. $0.4 \cdot D_{SB} \leq L_{NB} \leq 0.6 \cdot D_{SB}$, more preferably in the range from 0.4 to 0.5 times this diameter $D_{SB}$, i.e. $0.4 \cdot D_{SB} \leq L_{NB} \leq 0.5 \cdot D_{SB}$. The length $L_{TB}$ of the tail body 44 lies in the range from 1 to 2 times the diameter $D_{SB}$, i.e. $D_{SB} \leq L_{TB} \leq 2 \cdot D_{SB}$. The diameter $D_S$ of the wind turbines 10 lies in the range from 0.4 to 0.6 times the diameter $D_{SB}$ of the support body 40, i.e. $0.4 \cdot D_{SB} \leq D_S \leq 0.6 \cdot D_{SB}$.

During operation of the wind power installation 38, the wind blows from the side of the nose body 42, which directs the incoming wind away from the support body axis 46 towards the turbines 10 arranged in a circle around the support body 40 in the plane 48, in which the diameter of the support body 40 is largest. The reduction of available cross section causes the speed of the airflow to increase along the nose body 42. The speed reaches a maximum at the plane 48. Even at low wind speed, the speed of the airflow at the turbines may thus be high enough to start operation of the wind power installation.

To enable orientation of the wind power installation 38 into the wind, the support body 40 is rotatably mounted with respect to a vertical axis 50. This axis 50 preferably intersects with the nose body 42 or with a part of the tail body 44 that is close to the nose body. In this case, the wind power installation can be oriented by the forces of the wind. If the support body axis 46 is not aligned with the direction of the wind, the forces of the wind will create a moment on the support body 40 that turns the wind power installation 38 with the nose body 42 into the wind.

Figs. 5, 6, 7a and 7b show another type of a wind power installation 52. The wind power installation 52 comprises a substantially streamlined support body 54 extending along a vertical axis 54, on which the support body 52 is rotatably mounted. The support boy 52 comprises a plurality of mutually similar wind power installation modules 56, arranged one above the other along the vertical axis 54 to form a tower.

Each wind power installation module 56 has a substantially drop-shaped horizontal cross section, substantially vertical outer walls 58 and is symmetrical with respect to a vertical longitudinal plane 60. Each module 56 has a nose body 62 that normally faces into the wind during operation of the wind power installation 52 and a tail body 64 that normally faces away from the wind during operation of the wind power installation 52. The nose body has a substantially hemielliptical horizontal cross section, whereas the tail body tapers in downwind direction to the plane 60. Each module 56 further comprises, arranged on both sides thereof, with respect to the plane 60, wind turbines 10, whose turbine axes are substantially parallel to the plane 60 and horizontal. The turbines 10 are arranged on the modules where width of the modules perpendicular to the plane 60 is maximum.

The length $L_{NB}$' of the nose body 62 lies in the range from 0.4 to 0.6 times the width $D_{SB}$' of the modules, i.e. $0.4 \cdot D_{SB}' \leq L_{NB}' \leq 0.6 \cdot D_{SB}'$, more preferably in the range from 0.4 to 0.5 times this width $D_{SB}$', i.e. $0.4 \cdot D_{SB}' \leq L_{NB}' \leq 0.5 \cdot D_{SB}'$. The length $L_{TB}$' of the tail body 64 lies in the range from 1 to 2 times the width $D_{SB}$', i.e. $D_{SB}' \leq L_{TB}' \leq 2 \cdot D_{SB}'$. The diameter $D_S$ of the wind turbines 10 lies in the range from 0.4 to 0.6 times the width $D_{SB}$', i.e. $0.4 \cdot D_{SB} \leq D_S \leq 0.6 \cdot D_{SB}'$.

During operation of the wind power installation 62, the wind blows from the side of the nose bodies 62 of the individual modules 56, which directs the incoming wind away from the respective plane 60 towards the turbines 10 arranged laterally on the modules 56 with respect to the direction of the wind.. The reduction of available cross section causes the speed of the airflow to increase along the nose bodies 62. The speed reaches a maximum at the planes 60. Even at low wind speed, the speed of the airflow at the turbines 10 may thus be high enough to start operation of the wind power installation 62.

As the support body 52 is rotatably mounted with respect to the vertical axis 54, the wind power installation 52 may orient itself into the wind. For each module 56, the axis 54 preferably intersects with the nose body 62 or with a part of the tail body 64 that is close to the nose body 62. In this case, the modules 56 can be oriented by the forces of the wind. Preferably, the modules 56 can rotate about the axis 54 independently from each other to enable optimal orientation in case of the wind blowing from different directions at different heights from ground. One can also limit the angular motion of neighbouring modules 56 to a certain angle.

Figs. 8, 9, 10a and 10b show further embodiments of a wind power installation. The wind power installation shown in Figs. 8 and 9 comprises a wind power installation module 66 of substantially drop-shaped horizontal cross section. The module 66 is substantially symmetrical with respect to a vertical plane 68 extending in the longitudinal direction of the module 66. The module 66 comprises an immobile rounded nose body 70 that is rotationally symmetrical with respect to a vertical axis and a tail body 72 that is mounted rotatably about this vertical axis. The tail body 72, which, during operation, extends downwind of the nose body 70, carries a plurality of wind turbines 10 arranged in a semi-circular configuration in a vertical plane 74 perpendicular to the plane 68. The tail body 72 tapers in downwind direction to a point so that contour of the tail body follows a parabolic course. In a transversal cross section, the contour of the tail body is substantially semi-circular.

During operation, the tail body 72 orients itself downwind under the action of the forces of the wind, so that the turbines 10 become aligned with the wind direction. The nose body 70 remains immobile while the tail body 72 may pivot about the axis of symmetry of the nose body 70.

The horizontal diameter of the nose body 70 substantially corresponds to the lateral diameter of the tail body 72. Indeed, the tail body 72 is substantially flush with the nose body 70. The length $L_{TB}$" of the tail body 72 lies in the range from 1 to 2 times the width $D_{TB}$", i.e. $D_{TB}" \leq L_{TB}" \leq 2 \cdot D_{TB}"$. The diameter $D_S$ of the wind turbines 10 lies in the range from 0.4 to 0.6 times the width $D_{TB}$", i.e. $0.4 \cdot D_{TB}" \leq D_S \leq 0.6 \cdot D_{TB}"$.

The wind power installation shown in Figs. 10a and 10b comprises a module 75 with a support body including a toecap-shaped nose body 76 and a tail body 78 arranged substantially flush with one another. The support body 76, 78 is symmetrical with respect to a vertical longitudinal plane 80. A plurality of wind turbines 10 are arranged in a half-circle around the support body 76, 78 in the plane of greatest diameter of the support body 76, 78, this plane being perpendicular to the vertical longitudinal plane 80. The turbines are arranged so that their axes are substantially perpendicular to the plane of greatest diameter. The outer appearance of the present wind power installation is essentially that of the upper half of the wind power installation 38 discussed with respect to Figs. 3 and 4.

The module 75 is preferably rotatably mounted about an axis 82. It should also be noted that the module 75 can be arranged as a terminal module on top of a series of modules 56, as shown in Figs. 7a and 7b.

## Claims

1. A wind turbine comprising:

   a rotor comprising a certain number of blades;
   a stator supporting said rotor in such a way that said rotor may rotate on a turbine axis of said turbine for generating electric energy;
   a shroud extending circumferentially around said stator and said rotor, said shroud supporting said stator so as to define an air channel having a certain air channel diameter at an inlet portion of said shroud;
   **characterised in that** said shroud has a maximum outer diameter such that said air channel diameter is comprised in the range from 0.82 to 0.9 times the maximum outer diameter, and **in that** said shroud has a length in direction of said turbine axis that is comprised in the range from 0.1 to 0.25 times the outer diameter.

2. The wind turbine as claimed in claim 1, wherein said blades have a pitch adjustable to wind speed.

3. The wind turbine as claimed in claim 1 or 2, wherein said stator includes a central nose portion arranged on said turbine axis upwind of said rotor, said central nose portion being rotationally symmetrical with respect to said turbine axis, wherein said central nose portion has the shape of a hemiellipsoid rotationally symmetrical about said turbine axis.

4. The wind turbine as claimed in claim 3, wherein said stator comprises a central tail portion arranged on said turbine axis downwind of said rotor, said central tail portion including a substantially rotationally symmetrical tail fairing, said tail fairing having a diameter substantially equal, at said rotor, to a diameter of said nose portion, said tail fairing tapering in downwind direction to said turbine axis so that, in a longitudinal cross section along said turbine axis, a contour of said tail fairing follows a parabolic course.

5. The wind turbine according to any one of claims 1 to 4, comprising a protective grid for protection against birds mounted upwind of said rotor.

6. A wind power installation comprising a substantially streamlined support body, said support body supporting a plurality of wind turbines according to any one of claims 1 to 5, wherein said support body has a substantially drop-shaped horizontal cross section and is substantially rotationally symmetrical with respect to a longitudinal support body axis, wherein said plurality of wind turbines are arranged circumferentially around said support body in a plane perpendicular to said support body axis, wherein said support body comprises
   a nose body located upwind of said plane, said nose body having the shape of a hemiellipsoid rotationally symmetrical about said support body axis; and wherein
   a tail body located downwind of said plane, said tail body being arranged substantially flush with said nose body at said plane, said tail body tapering in downwind direction to said support body axis so that, in a longitudinal cross section along said support body axis, a contour of said tail body follows a parabolic course; and
   wherein said support body is rotatably mounted with respect to a vertical axis.

7. A wind power installation module having a substantially drop-shaped horizontal cross section and substantially vertical outer walls, said wind power installation module being substantially symmetrical with respect to a longitudinal vertical plane and comprising
   a nose body having a substantially hemielliptical horizontal cross section and
   a tail body located downwind of said nose body, said tail body being arranged substantially flush with said nose body and tapering in downwind direction to said longitudinal vertical plane, and
   wherein wind turbines according to any one of claims 1 to 5 are arranged on said wind power installation module on both sides thereof with respect to said vertical plane.

8. A wind power installation comprising a substantially streamlined support body, wherein said support body extends substantially along a vertical axis and comprises a plurality of wind power installation modules according to claim 8 arranged one on top of the other, said wind power installation modules being rotatably mounted about said vertical axis.

9. A wind power installation module having a substantially drop-shaped horizontal cross section, a substantially semicircular transversal cross section and being substantially symmetrical with respect to a vertical, longitudinal plane, said wind power installation module comprising
a rounded nose body, and
a tail body located downwind of said nose body, said tail body being arranged substantially flush with said nose body and tapering in downwind direction, and wherein wind turbines according to any one of claims 1 to 5 are arranged in a substantially semicircular configuration on said wind power installation module.

10. A wind power installation comprising a wind power installation module according to claim 9, wherein said turbines are rotatable about a common vertical axis.

Fig. 1

Fig. 2

_Fig. 3_

$D_S$

$10$

$48$

$38$

$42$

$44$

$46$

$x'$

$d'(x)$

$D_{SB}$

$L_{NB}$

$L_{TB}$

$10$

$40$

_Fig. 4_

$50$

$10$

$38$

$10$

Fig.5

$D_s$

$D'_{SB}$

62

54

10

58

52

52

60

64

58

10

$L'_{TB}$

$L'_{NB}$

Fig. 7a

75

56

10

10

58

Fig. 7b

75

56

10

10

Fig. 6

Fig. 8

74  10  66  72  70  $D_S$  $L''_{TB}$

Fig. 9

68  10  10  66  $D_S$  72  70  $D''_{TB}$

Fig. 10a

Fig. 10b

**European Patent Office**

**EUROPEAN SEARCH REPORT**

Application Number

EP 06 11 3881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/099607 A2 (GESTION SERVICE ENTPR FINANCIE [FR]; KUHLMANN HERVE [FR]; POULLAIN FRA) 18 November 2004 (2004-11-18) | 1-4 | INV. F03D1/04 F03D1/02 |
| Y | * page 3, line 27 - line 29 * * figure 1 * | 5 | |
| Y | DE 101 60 836 A1 (KROHN MATHIAS [DE]) 12 June 2003 (2003-06-12) * column 2, line 33 - line 35 * | 5 | |
| A | EP 1 550 807 A (DOHM RUDOLF [DE]; EBERT RONNY [DE]; EBERT JENS [DE]; BURAKOVSKI DMITRI) 6 July 2005 (2005-07-06) * figures 8,9,11 * | 6-8 | |
| A | DE 202 01 215 U1 (DOHM RUDOLF [DE]) 20 June 2002 (2002-06-20) * figure 3 * | 6 | |
| D,A | DE 39 05 337 A1 (TEPE WALTER PROF DR [DE]) 30 August 1990 (1990-08-30) * figure 7 * | 1,3,4 | TECHNICAL FIELDS SEARCHED (IPC) F03D |

The present search report has been drawn up for all claims

| Place of search | Date of completion of the search | Examiner |
|---|---|---|
| The Hague | 18 October 2006 | Angelucci, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 3881

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2006

| Patent document cited in search report | | Publication date | Patent family member(s) | | Publication date |
|---|---|---|---|---|---|
| WO 2004099607 | A2 | 18-11-2004 | CA 2523420 A1<br>CN 1780985 A<br>EP 1618300 A2<br>FR 2857062 A1 | | 18-11-2004<br>31-05-2006<br>25-01-2006<br>07-01-2005 |
| DE 10160836 | A1 | 12-06-2003 | NONE | | |
| EP 1550807 | A | 06-07-2005 | NONE | | |
| DE 20201215 | U1 | 20-06-2002 | NONE | | |
| DE 3905337 | A1 | 30-08-1990 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 668623 A5
- SU 1645603 A1
- US 5328334 A
- JP 4350369 A
- US 4140433 A
- DE 3905337 A1